# EUROPEAN PATENT APPLICATION

(11) **EP 4 748 262 A1**
(43) Date of publication of application: **27.05.2026**
(21) Application number: 25218195.3
(22) Date of filing: 25.11.2025
(51) Int. Cl.: A43B 7/08, A43B 23/02, B29D 35/12, B33Y 10/00, B33Y 80/00

(54) **LIQUID THERMOPLASTIC POLYMER APPLICATION FOR FOOTWEAR UPPERS**

(30) Priority: 26.11.2024 DE 102024134912
(71) Applicant: adidas AG, 91074 Herzogenaurach (DE)
(72) Inventor: KORMANN, Marco Florian, 91074 Herzogenaurach (DE); LIN, Yu-Chia, Taoyuan City 333411 (TW); LEE, Tsung-han, Taoyuan City 333411 (TW); KE, Chien-An, Taoyuan City 333411 (TW); CHEN, Li-Wei, Taoyuan City 333411 (TW); YU, Jing, Taoyuan City 333411 (TW)
(74) Representative: Bardehle Pagenberg Partnerschaft mbB Patentanwälte Rechtsanwälte

(57) **Abstract**

The present invention relates to a method of manufacturing an upper for an article of footwear. The method comprises the steps of providing a polymer; providing a solvent; and mixing the polymer with the solvent, thereby producing a liquified polymer. The method further comprises the steps of providing a substrate; dispensing strands of the liquified polymer onto the substrate such that the strands form a shape of at least a part of the upper; curing the strands; and removing the cured strands from the substrate. The present invention further relates to a corresponding upper for an article of footwear.

## Description

### 1. Technical Field

The present invention relates to a method of manufacturing an upper for an article of footwear by dispensing strands of a liquified polymer onto a substrate. The present invention further relates to a corresponding upper.

### 2. Technical Background

Articles of footwear generally comprise a sole and an upper. In traditional upper manufacturing, a flat two-dimensional raw upper is usually transformed into its desired three-dimensional shape of the final footwear by placing the raw upper or multiple components thereof on a last and stitching it together by one or more seams. This process mostly results in non-optimal fit in areas in which surfaces with two curvature directions are required, as for example on the forefoot vamp or the lateral quarter area. In recent years, footwear manufacturers developed a new technique in which parts of an article of footwear are formed from an extruded member.

For instance, document WO 2016/077221 A1 is directed to a production of constructs of footwear and components thereof by jet extrusion. The disclosed process uses jets or streams of materials that solidify as fibers, and which form into two- or three-dimensional webs as they are collected. The fibers may be produced using forced ejection of a selected starting fiber-forming, fluid material through an outlet port. The webs may be films, membranes, or mats. As an example, the document discloses that standalone sole units and sockliners made using forces pinning or other jet extrusion methods are possible.

Similarly, document US 2015/0040428 A1 relates to portions of an article of footwear formed from an extruded member. The extruded member can be a single, continuous piece of solid material. For example, a sole for an article of footwear can be fashioned from an extruded member formed in a controlled geometric pattern. The sole can include one or more layers. Other parts of articles of footwear and entire articles of footwear can be made using one or more extruded members. The extruded member can be made of rubber, foam, silicone, plastic, or thermoplastic.

Further prior art is mentioned in DE 10 2016 223 571 A1 and US 2006 / 0 276 095 A1.

However, while jet extrusion methods as known in the art result in randomly distributed mats of fine fibers, a predefined arrangement of the fibers and therefore a predefined tuning of the properties of the manufactured mats of fibers is not applicable. On the other hand, while the known processes of extruding an extruded member may be utilized to generate a controlled geometric pattern, these patterns are usually relatively coarse compared to traditional knit or woven textile patterns and therefore lack the ability of creating fine mesh structures.

It is therefore the problem underlying the present invention to improve methods of manufacturing an upper for articles of footwear so that the above outlined disadvantages of the prior art are at least partly overcome.

### 3. Summary of the Invention

The above-mentioned problems are solved by the subject matter of the independent claims of the present invention. Exemplary embodiments of the invention are defined in the dependent claims.

In an embodiment, the present invention provides a method of manufacturing an upper for an article of footwear. The method may comprise the steps of providing a substrate, dispensing strands of a liquified polymer onto the substrate such that the strands form a shape of at least a part of the upper, curing the strands, and removing the cured strands from the substrate.

In this manner, the present invention enables a highly flexible method of manufacturing a part or even an entire upper, which at the same time allows for a highly controlled dispensing of the strands onto the substrate. By this, footwear uppers with predefined characteristics and an improved shape can be provided. The term "dispensing" as used in the present invention is to be understood as a controlled extruding or outputting of a strand. The strand is arranged or laid onto the substrate. In particular, the dispensing differentiates over a mere force spinning or jet extrusion of fibers as disclosed in the prior art, which merely provide a random distribution of fibers as a mat or web.

The method may further comprise the steps of providing a polymer, providing a solvent, and mixing the polymer with the solvent, thereby producing the liquified polymer. In the prior art mentioned above, the extruding of the extruded member, for example a sole for an article of footwear, usually is carried out by e.g. extruding a preheated thermoplastic polymer material, which can be solidified by reducing its temperature. The present invention is based on a different approach, namely, the production of a liquified polymer by mixing the polymer and the solvent. The mixture can then be applied to and cured on the substrate. In this manner, the liquified polymer can be applied more precisely and efficiently on the substrate, as no heating of the liquified polymer is required.

A *"polymer"* according to present disclosure is but not limited to, a large molecule based on repeating subunits (monomers), which are bound together and form a network structure. Polymers may be classified as the following: Synthetic polymers, natural polymers, biodegradable polymers, composite polymers.

A *"solvent"* according to present disclosure is but not limited to, a compound capable of dissolving, dispersing, or extracting other compounds. Solvents may be polar or nonpolar. Common solvents are in liquid form but may be also a gas or a solid.

*"Mixing"* according to present disclosure is to be understood but not limited to, as a process of combining to or more substances resulting in a mixture of the individual substances.

*"Curing"* according to present disclosure is to be understood but not limited to, as a chemical and/or physical process of a substance which typically promotes hardening, setting and/or solidification of the same. Curing is based on chemical reactions, heat influences and/or other external or internal factors.

The substrate may comprise a three-dimensional shape of at least a part of a last. The substrate may even be a last. By dispensing the liquified polymer directly on a three-dimensional substrate or even a last, an upper or a part of the upper can already be formed in its required shape prior to the curing of the strands. Thus, additional steps of turning a two-dimensional part of an upper into a three-dimensional shape by stitching or glueing as required in the known art can be omitted. This results in a more efficient manufacturing technique of the part of the upper or the entire upper. The thus manufactured upper also results in a higher wearing comfort, since less or even no seams are required.

The substrate may comprise a metallic surface, a textured surface or a combination thereof. Depending on the desired characteristics of the upper, a surface roughness of the substrate may be adapted to influence a tactile perception of the upper on a side that is facing towards the substrate. This side may correspond to an internal surface of a finished upper facing towards a wearer's foot. For example, a recess in the substrate may result in a protrusion on the upper inner side. A protrusion on the substrate, on the other hand, may result in a recess on the upper inner side. By this, a structured inner side of an upper can be provided. The structurization may be used to reduce direct skin contact, imitate a more textile feel, improve a wearing comfort, reduce slipping of the foot inside the upper, for example.

The dispensing may comprise dispensing the liquified polymer through a nozzle. This may be achieved, for example, by moving the nozzle with respect to the substrate. By moving the substrate around a fixed nozzle or by moving a nozzle around a fixed substrate or by moving a nozzle around a moving substrate, a preprogrammed strand dispensing resulting in a desired upper shape can be achieved.

The dispensing may comprise dispensing strands with a width of 1-10 mm, preferably 2 mm-4 mm, most preferably 3 mm. The inventors found that the liquified polymer enables the dispensing of strands having the specified (small) width. The term "width" as used in the present invention is to be understood as a diameter in case of a round strand or the largest diameter in case of an oval or differently shaped strand. Based on the fine width as specified, an upper can be manufactured which has similar characteristics compared to a traditional textile upper while at the same time can be more easily adapted to specific needs. This is because instead of developing a complex knitting or weaving pattern, a dispensing pattern can be configured and optimized more efficiently.

A width of the strands after the curing is 0.3 mm-0.7 mm, preferably 0.5 mm. Thus, the present invention provides a manufacturing technique for uppers having a textile like feel without the disadvantages and limitations of a traditional textile pattern, such as a knitting or weaving pattern. The textile feel can be achieved based on the fine size of the individual strands used for manufacturing the part of the upper or the entire upper.

The dispensing may comprise dispensing the strands in a first area of the substrate and a second area of the substrate such that a mechanical property of the cured strands in the first area differs from a mechanical property of the cured strands in the second area. Due to the high degree of freedom of movement during the dispensing of the liquified polymer on the substrate, areas with different mechanical properties can efficiently be manufactured.

A magnitude of a mechanical property of the cured strands in a third area may differ from a magnitude of the same mechanical property of the cured strands in a fourth area. By this, not only different mechanical properties can be achieved by the disclosed method but even the magnitude of a same mechanical property can be adjusted.

The mechanical property of the cured strands may be at least one of density, width, strand diameter, elasticity, breathability, watertightness, tensile strength, Shore hardness, traction, or a combination thereof. Each of these properties can be optimized individually or in combination by adapting the dispensing of the liquified polymer accordingly.

The dispensing may comprise dispensing the strands in a strand pattern. In particular, the dispensing may comprise dispensing the strands in a strand pattern by arranging individual strands on the substrate and/or a previously dispensed strand to form the strand pattern. Depending on the strand pattern, a degree of a textile feel may be adjusted. The strand pattern may further define one or more of the mechanical properties described above.

In some embodiments, the method may further comprise the steps of heating at least a part of the cured strands and attaching the part of the strands to a first component of the article of footwear. By this, no stitching or glueing may be necessary for attaching the part of the upper to the first component. The first component may comprise or even be a sole component. This enables a welding of the upper to the sole component without requiring stitches or glueing. The first component may be a midsole. In this manner, a strobel board and/or a stitching of the upper to a strobel board can be avoided, which results in a smooth and non-irritating transition from the upper to the midsole. Thus, a wearing comfort can be improved.

The method may further comprise arranging a second component on the substrate prior to the dispensing, wherein the dispensing may further comprise dispensing the strands of the liquified polymer at least partly onto the substrate and at least partly onto the second component. By this, no glueing or even heating treatments may be required for attaching the upper to the second component. Since the liquified polymer has a high sticking coefficient, the second component may adhere to the liquified polymer and may be firmly attached after the curing step. The second component may comprise at least one of a reinforcing component, a padding component, a foil component, a mesh component, a foam component.

The polymer may be selected from the group of polyurethanes (PU), thermoplastic polyamides (TPA), thermoplastic polyesters (TPE), thermoplastic styrenic block copolymers (TPS), thermoplastic polyurethanes (TPU), thermoplastic vulcanizates (TPV), rubber or ethylene-vinyl copolymer (EVA), preferably thermoplastic polyurethanes (TPU), and/or combinations thereof. The inventors have found that the use of these polymer allows for a time efficient and sustainable process in the production of the component. Suitable polymer materials may be elastic foam materials, such as thermoplastic elastomers and/or elastomers. Preferred materials used in present disclosure are thermoplastic elastomers. More preferred materials used in present disclosure are urethane-based thermoplastic elastomers (TPU), polyester-based thermoplastic elastomers (TPE) and/or polyamide-based thermoplastic elastomers (TPA).

The solvent may be a mixture selected from a group of solvent-borne and/or water-borne solvents, preferably from the group of solvent-borne solvents, more preferably from the group of (C1-C6) ethers, (C1-C10) esters, (C1-C8) ketones, (C1-C8) alkanes, and/or combinations thereof. These solvents have shown the best compatibility with the production method of the upper, while allowing for flexible adaptation of mechanical characteristics of the polymer to the requirements of the product and the process.

The solvent may be a mixture of one or more of tetrahydrofuran (THF), methyl ethyl ketone (MEK), cyclohexane (CYC), ethyl acetate, butyl acetate, preferably THF and/or CYC. These solvents have the advantage that they can be removed in a time efficient manner during the curing process and allow for a production process that is capable of adapting to various mechanical properties of the liquid polymer.

A ratio of the mixture may be in the range of 10 to 90 vol. %., preferably 20 to 80 vol. %, more preferably 30 to 70 vol. %.19. Alternatively, the ratio of the mixture may be in the range of 10 to 90 wt.%., preferably 20 to 80 wt. %, more preferably 30 to 70 wt. %. The inventors have found that the ratio of the mixture of the solvent shows the best compatibility for both mixing the polymer and changing/adapting the mechanical characteristics of the liquified polymer to the special requirements of the product and the process.

The liquified polymer may comprise a dynamic viscosity of 10000 to 50000 mPa·s, preferably of 20000 to 40000 mPa·s. The liquid polymer comprising the specific dynamic viscosity allows for its use in automated and/or manual deposition processes.

A ratio of the polymer to the solvent in the mixing step may be in the range of 2:98 to 40:60 vol.%, preferably, 5:95 to 30:70 vol.%, more preferably, 10:90 to 20:80 vol.%. The inventors have found that the specific ratio of solvent to the polymer allows for convenient use in the dispensing process and flexible adaptation to the requirements of the product and/or process.

The liquified polymer may further comprise pigments. This allows for a preferred color selection of the liquified polymer. For example, some liquified polymers, such as liquified thermoplastic polyurethane, may have a glass-like transparency without color pigments. By adding pigments to the liquified polymer in an amount up to 1 vol. %, a desired color effect can be achieved without negatively affecting the mechanical properties of the cured strands.

The liquified polymer may further comprise fibers. This allows for an increased stiffness and durability in the selected areas of application. *"Fibers"* are to be understood but not limited to, as threads or filaments based on natural and/or synthetic materials. For example, the inventors found that adding glass-fibers in the amount of 2,5 to 5 wt. % to the liquified polymer improves the durability, in particular an abrasion resistance, of the upper.

The liquified polymer may further comprise granulates. The granulates may comprise various materials, e.g. finely ground rubber particles in the range of 0,1 - 0,3 mm. In this manner, traction and grip properties are enhanced in selected areas of the upper based on the use of the granulates. Moreover, a visual appearance of the upper may be enhanced. *"Granulates"* are to be understood but not limited to, as particles with different size and shape which may have specific mechanical properties based on natural and/or synthetic materials.

The liquified polymer may further comprise a blowing agent. A blowing agent is to be understood as a substance which expands during the curing step and thereby produces a cellular structure via a foaming process in the upper. The cellular structure in a matrix reduces its density, increasing relative stiffness of the original polymer. By this, a surface roughness of the upper may be increased in dependence of the amount of blowing agent used. The surface roughness may increase a textile feel of the upper resulting in a more pleasant wearing comfort.

The curing may comprise curing at a curing temperature of between 20°C to 150°C, preferably 30°C to 100°C, more preferably 40°C to 50°C, for a curing duration of between 2 min to 750 min, preferably, 5 min to 390 min, more preferably 10 min to 30 min. The inventors have found that these curing conditions allow for a cost- and energy-efficient process for the production of the upper.

The dispensing may comprise dispensing the liquified polymer having a temperature in the range of 10°C to 40°C, preferably 15°C to 30°C, most preferably ambient temperature. The inventors have recognized that known methods of manufacturing an upper based on a softening of a thermoplastic polymer by increasing its temperature above its glass transition temperature are mostly complex, time consuming and inefficient. Instead, the present disclosure focuses on an alternative approach, namely the liquified polymer. Based on the mixing of the polymer and the solvent, no elevated temperatures are required for the methods disclosed herein. This provides an improved and more flexible manufacturing method compared to known techniques.

In a further aspect, the present invention provides an upper for an article of footwear made by a method comprising one or more steps as described above.

### 4. Short Description of the Figures

Possible embodiments of the present invention will be further described in the following detailed description with reference to the following Figures:
**Fig. 1** a flow diagram illustrating an embodiment of a manufacturing method;
**Fig. 2** an illustration of an embodiment of an article of footwear comprising multiple strand patterns;
**Fig. 3** an illustration of another embodiment of a substrate;
**Fig. 4A** an illustration of an embodiment of liquified polymer strand dispensed on a substrate;
**Fig. 4B** an illustration of the polymer strand of Fig. 4A after a curing and removing of the strand from the substrate;
**Fig. 5A** an illustration of an embodiment of a liquified polymer strand before activation of the blowing agent;
**Fig. 5B** an illustration of the polymer strand after curing and activating of the blowing agent;
**Fig. 6** an illustration of another embodiment of an article of footwear comprising multiple mechanical zones;
**Fig. 7A** an illustration of another embodiment of an article of footwear comprising a low density strand pattern;
**Fig. 7B** an illustration of another embodiment of an article of footwear comprising a high density strand pattern;
**Fig. 8** an illustration of an embodiment of an upper comprising components attached to the upper; and
**Fig. 9** an illustration of another embodiment of an article of footwear comprising zones of differing mechanical stiffness.

### 5. Detailed description of some exemplary embodiments

In the following, exemplary embodiments of the present invention are described in more detail, with reference to an upper for an article of footwear. While specific feature combinations are described in the following with respect to the exemplary embodiments of the present invention, it is to be understood that the disclosure is not limited to such embodiments. In particular, not all features have to be present for realizing the invention, and the embodiments may be modified by combining certain features of one embodiment with one or more features of another embodiment.

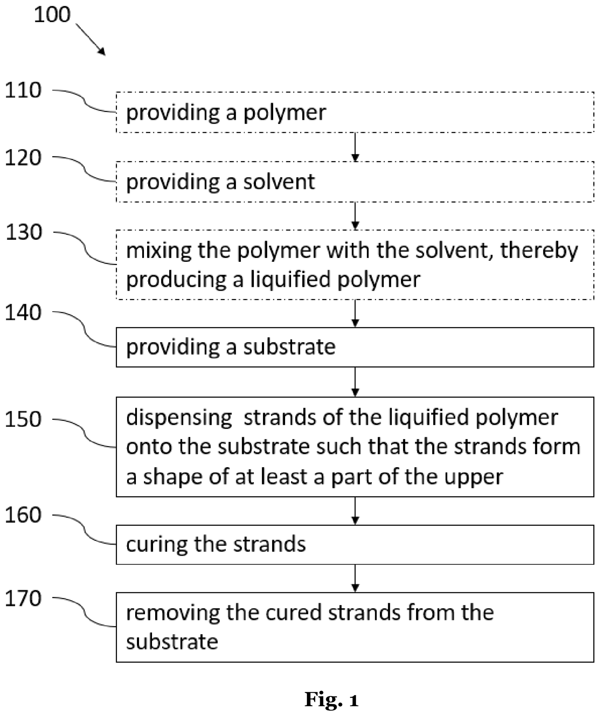

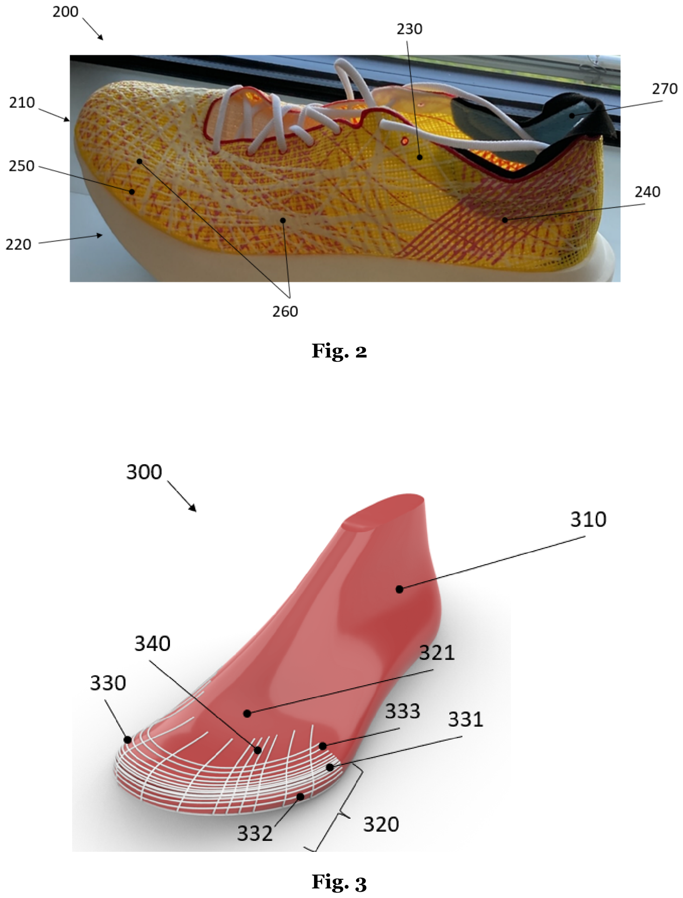

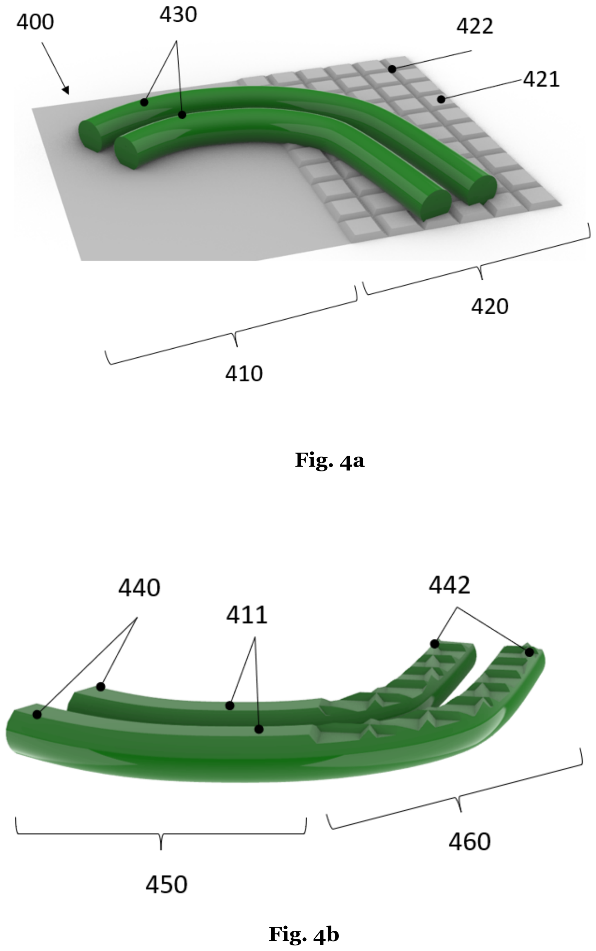

**Figure 1** presents a flow diagram illustrating exemplary method steps for a method 100 for manufacturing an upper 210, 610, 710, 760, 800, 950 for an article of footwear 200, 600, 700, 750, 900 according to the invention. The method 100 comprises the step 140 of providing a substrate 300, 400. The substrate 300, 400 may have a three-dimensional shape of at least a part of a last 300. In some embodiments, a last 300 may be used as substrate 300, 400. The substrate 300, 400 may comprise a metallic surface 310, 410, 420 a textured surface 420 or a combination thereof. Further details of an embodiment of a substrate 300, 400 are provided with reference to **Figures 3** **and** **4** below.

The method 100 further comprises the step 150 of dispensing strands 430, 500 of the liquified polymer onto the substrate 300, 400 such that the strands 430, 500 form a shape of at least a part of the upper 210, 610, 710, 760, 800, 950. Thus, after the dispensing, the liquified polymer may essentially already be in its final shape as desired or intended for upper 210, 610, 710, 760, 800, 950. The term "essentially" refers to minor changes of the liquified polymer strands 430, 500 which occur during the curing step (see below). Thus, based on the advantageous dispensing further steps of turning a two-dimensional part of an upper into a three-dimensional shape may not be required for the upper 210, 610, 710, 760, 800, 950 according to the present invention. The dispensing in step 150 may comprise dispensing the liquified polymer through a nozzle. The nozzle may be moved with respect to the substrate 300, 400. Thus, either the nozzle can be moved and the substrate 300, 400 is fixed, or the substrate 300, 400 can be moved and the nozzle is fixed. It may also be advantageous if both, the substrate 300, 400 and the nozzle are moving at the same time during the dispensing. In this manner, practically no limitations are provided and all kinds of shapes of uppers 210, 610, 710, 760, 800, 950 may be manufactured based on the present invention.

Additionally or alternatively, the step 150 may comprise dispensing strands 430, 500 with a width of 1-10 mm, preferably 2 mm-4 mm, most preferably 3 mm. It may be noted that also varying widths within the same strand 430, 500 are possible based on the invention. For example, portions of varying width of a single strand 430, 500 may be achieved by changing a pressure applied to the liquified polymer for pressing the liquified polymer through a nozzle during the dispensing. This adaptable width within a single strand 430, 500 was not possible in the known techniques as discussed in the background section, such as jet extrusion or force spinning of fibers.

The width of the strands 440, 510 after the curing may be in the range of 0.3 mm-0.7 mm, preferably 0.5 mm. Such small diameters were also not possible using the known extrusion techniques. This may be mainly based on a lower viscosity of the liquified polymer compared to the mostly heated polymers used in the art of jet extrusion or force spinning. A dynamic viscosity of the liquified polymer may be in the range of 10000 to 50000 mPa·s, preferably of 20000 to 40000 mPa·s. Method 100 enables a dispensing of the liquified polymer having an advantageous small width. The fine strands 430, 440, 500, 510 as described provide an upper 210, 610, 710, 760, 800, 950 having similar or improved characteristics compared to a traditional textile upper. At the same time limitations of traditional textile uppers, such as knitting or weaving requirements, or the disadvantages resulting from the shape transformation from a two-dimensional textile into a three-dimensional shape of an upper are not limiting.

Additionally or alternatively, the step 150 may comprise dispensing the strands 430, 500 in at least two areas 310, 410, 420 of the substrate 300, 400 such that a mechanical property of the cured strands 440, 510 differs in these areas 310, 410, 420. Additionally or alternatively, the dispensing may also be such that a same mechanical property may have different magnitudes. The mechanical property of the cured strands 440, 510 may be at least one of density, width, strand diameter, elasticity, breathability, watertightness, tensile strength, Shore hardness, traction, or a combination thereof.

Additionally or alternatively, the step 150 may comprise dispensing the strands 430, 500 in a strand pattern 230, 240, 250, 260. This may be achieved by arranging individual strands 430, 500 on the substrate 300, 400 and/or a previously dispensed strand in the strand pattern 230, 240, 250, 260. Depending on the strand pattern 230, 240, 250, 260, a degree of a textile feel may be adjusted. The strand pattern 230, 240, 250, 260 may further be at least in part decisive for the mechanical properties of the upper 210, 610, 710, 760, 800, 950. For example, a dense strand pattern 230, 240, 260 may result in a higher tensile strength compared to a loose or less dense strand pattern 250.

In addition to the mechanical properties provided by the strand pattern 230, 240, 250, 260, also the softness/stiffness of the polymer used in the liquified polymer can influence the mechanical properties. In this case the mechanical property is based on the softness/stiffness of the individual strand. A Shore A value of the polymer used may range from Shore A smaller than 50, resulting in a soft and comforting strand, up to Shore A larger than 90, for highly stiff strands 430, 440, 500, 510.

The method 100 may further comprise a step of arranging a second component on the substrate 300, 400 prior to the dispensing, wherein the dispensing may further comprise dispensing the strands 430, 500 of the liquified polymer at least partly onto the substrate 300, 400 and onto the second component. By this, no glueing or even heating treatments may be required for attaching the upper 210, 610, 710, 760, 800, 950 to the second component. The second component may comprise at least one of a reinforcing component 810, a padding component 270, 820, 821, a foil component, a mesh component, a foam component.

The method 100 further comprises the step 160 of curing the strands 430, 500. In this way, the liquified polymer having the shape of the substrate 300, 400 is cured while at the same time the solvent(s) existent in the liquified polymer is (are) removed. The solvent may be removed via condensation and the condensates may be recycled. The curing temperature in the curing step 160 can be between 20°C to 150°C, preferably 30°C to 100°C, more preferably 40°C to 50°C, and the curing time is between 2 min to 750 min, preferably, 5 min to 390 min, more preferably 10 min to 30 min. In some embodiments the curing step 160 may be carried out using radiation. Curing 160 is preferably performed using infrared radiation (IR). However, other types of radiation are applicable. The width of the strands 440, 510 after the curing step 160 is 0.3 mm- 0.7 mm, preferably 0.5 mm.

In some embodiments, prior to step 140, method 100 may comprise the optional step 110 of providing a polymer. The polymer is selected from the group of elastomers and/or thermoplastic elastomers. Preferred materials from the group of elastomers are block foams, such as ethylene-vinyl-acetate (EVA), polyurethanes (PU) and/or rubber. Thermoplastic elastomers (TPE) are bead-, block foams, crosslinked, and/or un-crosslinked and can be classified using the following groups: TPE-O or TPO; TPE-V or TPV; TPE-U or TPU; TPE-E or TPE or TPC; TPE-S or TPS; TPE-A or TPA. Polymer materials from the group of TPE-O or TPO are polypropylene (PP), ethylene propylene diene rubber or ethylene propylene diene monomer rubber (EPDM). Preferred polymer materials from the group of TPE-V or TPV are thermoplastic vulcanizates such as Sarlink^{®}. Polymer materials from the group of TPE-U or TPU are further classified in ester based, ether based, or linear UP materials. For instance, a preferred ester-based TPU material group is e.g. Huntsman-H Foam^{®} such as Huntsman A6055Ag^{®}. For example, a preferred ether-based TPU material group is e.g Elastollan^{®} 11XX (BASF) such as Elastollan^{®} 1170A. Preferred polymer materials from the group of TPE-E or TPC are e.g. Hytrel^{®} (DuPont), Keyflex^{®} (LG) and/or Arnitel^{®} (DSM). A preferred polymer material from the group of TPE-S or TPS is, for example, Styroflex^{®} (BASF). Preferred polymer materials from the group of TPE-A or TPA are from the group of polyether block amides, such as PEBAX^{®}, and/or Vestamid^{®}.

In embodiments in which the method 100 comprises the step 110, the method may further comprise the optional step 120 of providing a solvent. Suitable solvents are solvents selected from the group of solvent-borne and/or water-borne solvents, preferably from the group of solvent-borne solvents, more preferably from the group of (C1-C6) ethers, (C1-C10) esters, (C₁-C₈) ketones, (C₁-C₈) alkanes, and/or combinations thereof. The solvent is preferably a mixture of one or more of tetrahydrofuran (THF), methyl ethyl ketone (MEK), cyclohexane (CYC), ethyl acetate, butyl acetate, preferably THF and/or CYC. The ratio of the mixture of the solvent is in the range of 10 to 90 vol%., preferably 20 to 80 vol. %, more preferably 30 to 70 vol. %.

In embodiments in which the method 100 comprises the steps 110, 120, the method 100 may further comprise the optional step 130 of mixing the polymer and the solvent, thereby producing the liquified polymer. The ratio of the polymer to the solvent in the mixing step is in in the range of 2:98 to 40:60 vol.%, preferably, 5:95 to 30:70 vol.%, more preferably, 10:90 to 20:80 vol.%. The ratio of the polymer to the solvent in the mixing step is in in the range of 10 to 90 wt.%., preferably 20 to 80 wt. %, more preferably 30 to 70 wt. %.

The method 100 may further comprise the steps of heating at least a part of the cured strands 440, 510 and attaching the part of the strands 440, 510 to a first component of the article of footwear. The first component may comprise or even be a sole component 220, 620, 625, 720, 770, 960, for example a midsole 220, 620, 720.

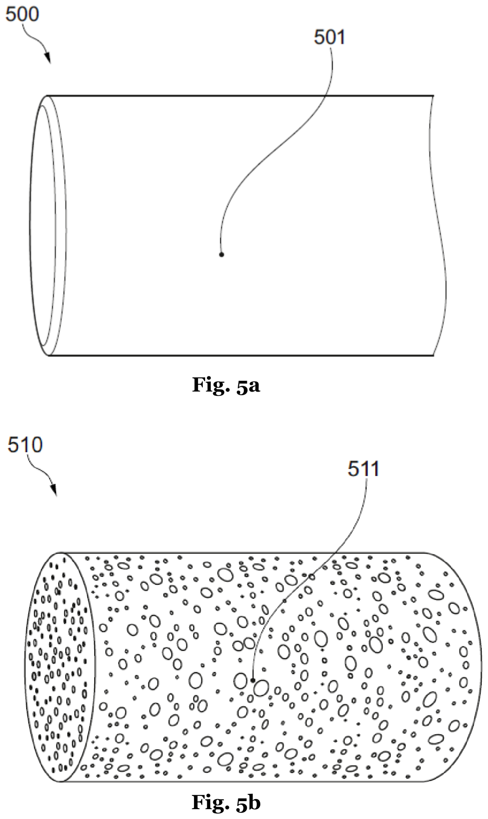

The liquified polymer used in method 100 may comprise pigments, fibers, granulates and/or a blowing agent. The effect of the blowing agent will be described in more detail below with reference to **Figure 5****.**

**Figure 2** depicts an embodiment of an article of footwear 200 manufactured according to the methods described herein. For example, upper 210 of footwear 200 may be manufactured as described above with reference to method 100. Article of footwear 200 further comprises a sole 220 attached to upper 210. For example, a part of the cured strands of upper 210 may be heated and attached to a sole component of sole 220. The sole component may be a midsole of sole 220. Based on the heated strands, no stitching or glueing may be required for attaching the sole 220 to the upper 210.

Upper 210 comprises various layers and distinct patterns 230, 240, 250, 260 of cured strands. A base layer comprises a mesh-like pattern 230, similar to a traditional knitted textile. The base layer has been manufactured by depositing the liquified strands onto a substrate as described above. On the base layer, a second layer in a second pattern 240 has been deposited in a heel area. The second pattern 240 is a regular pattern of essentially parallel strands. The strands of the second pattern 240 have a higher width compared to the strands of the base layer. The second pattern 240 is adapted to provide stability in the heel area of upper 210.

Upper 210 further comprises a third pattern 250 arranged on the base layer in a forefoot to midfoot area. The third pattern 250 is a regular pattern of strands essentially arranged in a diamond shaped pattern 250 or a rhomboidal pattern 250. The third pattern 250 is adapted to provide improved stretchability in the forefoot area.

Upper 210 further comprises a fourth pattern 260 arranged on the third pattern 250 in a toe box area and on a medial (not shown in **Figure 2****)** and a lateral side of upper 210. The strands of the fourth pattern 260 are irregularly dispensed having a higher density in areas in which a higher traction or abrasion resistance is required. The fourth pattern 260 may be advantageous for uppers for soccer shoes, for example, since the cured strands provide a high friction or stickiness beneficial at areas which are used for ball control. Based on the various layers of cured strands which have been dispensed directly onto a substrate during manufacture, upper 210 comprises a surface close to the foot of a wearer while also providing a superior traction and grip to a ball, for example.

Upper 210 further comprises a padding 270 in the heel area of the footwear 200. The padding can be made from a traditional textile and attached to the upper 210 by heating the cured strands in this area. The padding 270 increases a wearing comfort for a wearer of article of footwear 200. The padding 270 further stabilizes the collar region of upper 210 preventing it from collapsing in. By this, stepping into footwear 200 is facilitated. In another embodiment, a padding may also be made by dispensing a liquified polymer as described above. For example, a multilayer of cured strands having a mesh like pattern may provide similar cushioning properties as a padding from traditional textiles. It is even possible to manufacture an entire footwear upper exclusively based on the disclosed dispensing of liquified polymer method.

**Figure 3** depicts an embodiment of a substrate 300 having a shape of a last 300. Substrate 300 may even be a last 300. Substrate 300 has a smooth and metallic surface 310. Surface 310 facilitates a removing of the cured strands from the substrate 300 after the curing step. In a forefoot and toe area 320 of substrate 300 two different layers 330, 340 of liquified polymer strands are depicted. A first layer 330 of liquified polymer strands has been dispensed along a tip section of the toe area 320 starting at the side of the first toe and extending to the side of the fifth toe. If the substrate 300 would be placed on a ground with a sole section facing the ground, the strands of the first layer 330 would essentially extend parallel to the ground. A density of the dispensed strands of the first layer 330 is highest in a central section 331 compared to the edge sections 332, 333. Based thereon, the central section 331 provides a higher degree of abrasion resistance, reinforcement and protection of the toes compared to the less dense edge sections 332, 333. On the other hand, edge section 333 provides a higher degree of elasticity and breathability compared to the denser central section 331.

The second layer 340 of liquified polymer strands is arranged on top of the first layer 330. The strands of the second layer 340 run essentially perpendicular to the strands of the first layer 330. The strands of the second layer 340 start below the toe area 320 on a side where a sole is to be attached and extend upwards in direction to a vamp area 321 of substrate/last 300. The strands of the second layer 340 provide a small directional tensile strength along the individual strands of the first layer 330 strength based on the low density compared to the strands.

In **Figure 3****,** the first 330 and second 340 layers of dispensed liquified polymer strands are arranged in an area of the last 300 which is curved in two directions. These areas are difficult to manufacture based on traditional methods in which a two-dimensional surface must be shaped into the required three-dimensional shape without introducing kinks or creases. The present invention overcomes these difficulties of the prior art. Thus, in some embodiments at least a part of an upper which is curved in two directions is manufactured according to the methods disclosed herein.

**Figure 4A** depicts an embodiment of another substrate 400 according to the present invention. Substrate 400 has two distinct surface areas 410, 420. The first surface area 410 is smooth while the second surface area 420 has a textured surface. In **Figure 4A****,** the textured surface of the second surface area 420 consists of quadratic protrusions 421 arranged in a regular configuration. Between the quadratic protrusions 421 recesses 422 are formed. Other shapes and forms of protrusions are also applicable.

During the dispensing of the liquified polymer strands 430 onto substrate 400, the two surface areas 410, 420 result in differently textured cured strands 440, as depicted in **Figure 4B****.** The section 450 of the cured strands 440 corresponds to the section of the strands 430 arranged on surface area 410, and section 460 of cured strands 440 corresponds to the section of the strands 430 arranged on surface area 420, respectively. Depending on the level of viscosity of the liquified polymer, the side of the strands 430 facing the substrate 400 will at least partially flow into the recesses 422 in the second surface area 420. This results in protrusions 442 on the side of the cured strands 440, which was facing the substrate 400 prior to the removing. The same side of the cured strands 440 in section 450 has been smoothly flattened 411 based on having been dispensed on the smooth surface area 410.

In general, a section of a strand which has been dispensed and cured on a textured surface will keep a rougher or textured surface compared to a section dispensed and cured on a smooth(er) surface. In other words, the cured strands generally may have a roughness corresponding to a negative shape of the surface. The term "negative" is to be understood that a recess in the substrate translates into a protrusion in the cured strand and vice versa. The different textures of the cured strand provide different haptics or tactile perceptions to a wearer of an upper manufactured in accordance with the present invention. The textured side of the strands may correspond to the side of the upper facing a wearers foot. Textured strands can be used for reducing the area of the upper with direct skin contact. Additionally or alternatively, the textured strands can be adapted to imitate a textile haptic or feel for the wearer.

**Figures 5A/5B** depict a schematic illustration of strands 500, 510 in accordance with the present invention. Strands 500, 510 comprise a blowing agent. **Figure 5A** depicts strand 500 prior to a curing step. Thus, in strand 500 the blowing agent has not been activated yet and strand 500 has a smooth and closed surface 501.

**Figure 5B** depicts strand 510, which corresponds to strand 500 after the curing. During the curing process, the blowing agent gets activated and expands thereby producing a cellular structure via a foaming process in strand 510. The cellular structure creates a surface roughness 511 of strand 510, which degree depends on the amount of blowing agent used in the liquified polymer. The surface roughness 511 increases a textile feel of the upper manufactured in accordance with the present invention thereby resulting in a more pleasant wearing comfort for a wearer. The blowing agent may be adapted to not increase the width of the cured strand 510 more than 10%, preferably not more than 5% compared to a cured strand with no blowing agent.

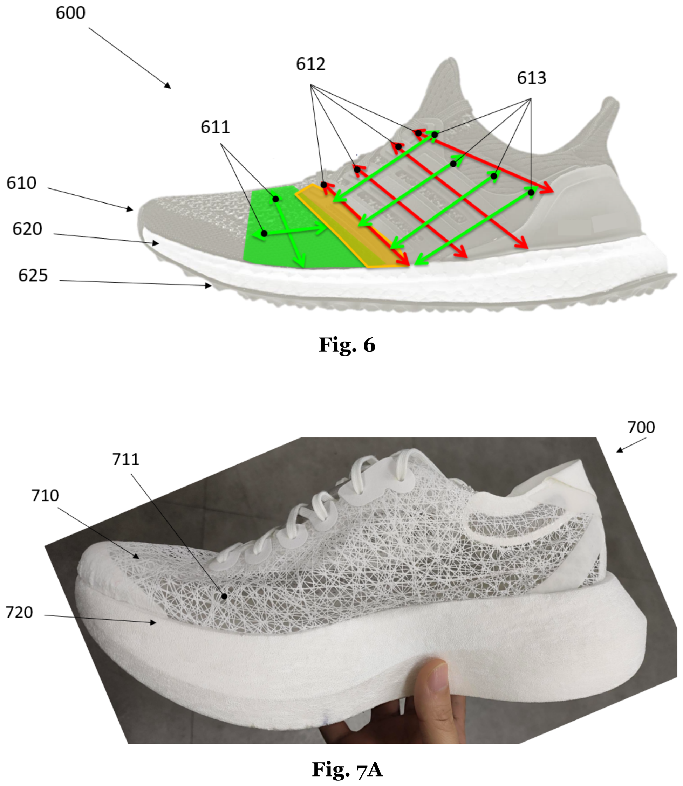

**Figure 6** depicts an embodiment of an article of footwear 600 manufactured according to the methods described herein. For example, upper 610 of footwear 600 may be manufactured as described above with reference to method 100. Article of footwear 600 further comprises a midsole 620 attached to upper 610. For example, a part of the cured strands of upper 610 may be heated and attached to a midsole 620. Based on the heated strands, no stitching or glueing may be required for attaching the midsole 620 to the upper 610, after the strands are cooled down again. On an opposite side of midsole 620 an outsole 625 is further attached.

**Figure 6** further depicts three exemplary zones of different mechanical properties. These mechanical properties may be specifically adapted for an improved laceless article of footwear 600. Thus, upper 610 should be provided with sufficient lockdown, to ensure that footwear 600 stays on the wearer's foot even when swinging the leg during a sprint or when hitting a ball, for example. On the other hand, upper 610 should also be provided with sufficient elasticity to ensure that a wearer can easily step in when putting on footwear 600.

These various mechanical properties can be efficiently provided based on the method as described herein. In the first zone, an omnidirectional or non-directional stretchability of upper 610 is provided (indicated by arrows 611). Such Stretchability can be achieved based on a polymer material having one or more of: a Shore A hardness below 70, a high stretchability, low stiffness etc. In the second zone a directional lockdown indicated by arrows 612 is provided while an essentially perpendicular stretchability (indicated by arrows 613) is also provided in a different direction. This can, for example, be achieved by utilizing a hard polymer material, thicker strands, and/or stiffer strands for the upper dispensed in a direction parallel to arrows 612. At the same time, strands having similar properties as described with reference to the first zone are dispensed on the substrate in direction of arrows 613. A dispensing of the different strands may be separated in alternating layers (e.g. first dispensing a layer of strands in direction of arrows 612, than dispensing a layer of strands in direction of arrows 613, ...). It is, however, also applicable that a mesh pattern is dispensed, in which a strand in direction 612 is dispensed followed by a strand in direction 613, followed by a strand in direction 612, and so forth. While **Figure 6** is to be understood as an exemplary embodiment, other arrangements of different zones having one or more of the above-described mechanical properties is also applicable based on the present disclosure.

**Figure 7A** depicts an embodiment of an article of footwear 700 manufactured according to the methods described herein. For example, upper 710 of footwear 700 may be manufactured as described above with reference to method 100. Article of footwear 700 comprises a sole 720 attached to upper 710. Preferably, a part of the cured strands of upper 710 may be heated and attached to a midsole 720. Based on the heated strands, no stitching or glueing may be required for attaching the sole 720 to the upper 710. However, alternative attachment methods, like stitching or glueing, may also be in accordance with the present disclosure.

**Figure 7A** depicts an embodiment of an upper 710 having a high degree of breathability provided by the strand pattern having openings 711. Upper 710 may also have various zones with distinct levels of breathability, which may be adapted to breathability perception zones of a human foot, for example. For this, a density of strands is low (compared to a density of strands providing a closed surface as in upper 760, for example) and arranged in a mesh-like pattern, such that multiple openings 711 are provided in upper 710. Upper 710 may be advantageous for articles of footwear adapted for running, for example.

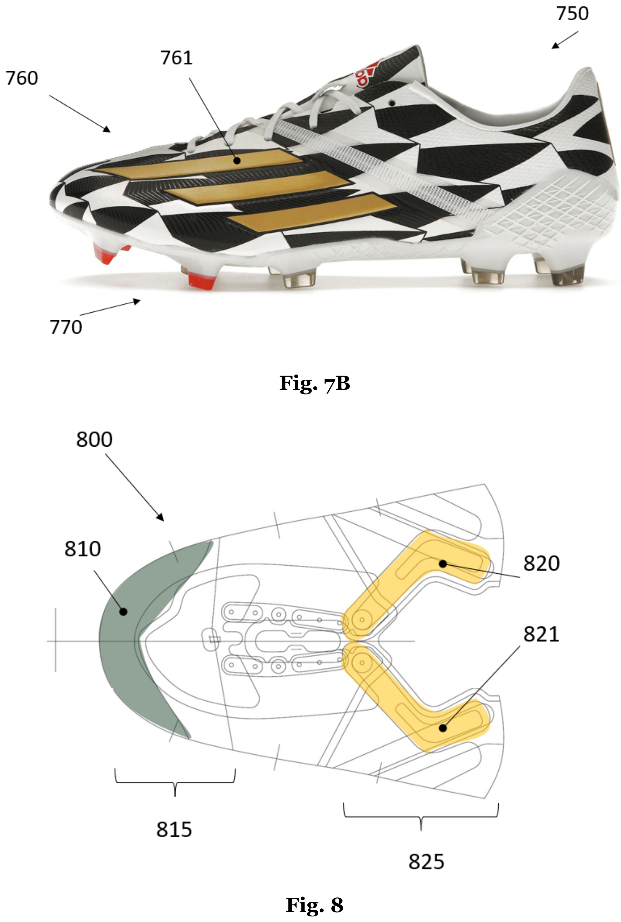

**Figure 7B** depicts an embodiment of an article of footwear 750 manufactured according to the methods described herein. For example, upper 760 of footwear 750 may be manufactured as described above with reference to method 100. Article of footwear 750 comprises a sole 770 attached to upper 760.

Contrary to footwear 700, article of footwear 750 depicts an embodiment of an upper 760 having a high degree of traction and/or watertightness. Upper 760 may also have various zones with distinct levels of traction, which may be adapted based on the respective usage or kind of sports for which upper footwear 750 is intended for, for example. For this, a density of strands is high (i.e. higher compared to upper 710) and arranged in a mesh-like pattern, such that no openings but instead a closed surface 761 is provided in upper 760. Upper 760 may be beneficial for articles of footwear adapted for playing soccer, for example.

**Figure 8** depicts a schematic illustration of an embodiment of an upper 800 manufactured according to the methods described herein. For example, upper 800 may be manufactured as described above with reference to method 100. Upper 800 comprises a reinforcing element 810 in a toe area 815. For example, the reinforcing element 810 may have been arranged on a substrate prior to any dispensing. Then, the liquified polymer strands are dispensed onto the substrate and onto the reinforcing element 810. Since the liquified polymer strands have a high sticky coefficient, the reinforcing element 810 and the dispensed strands are attached to each other. The level of attachment is further increased and potentially made permanently by the curing step. Alternatively, the reinforcement element 810 may be attached to an upper after the dispensing but prior to the curing step. In this manner it is possible to have the reinforcement element 810 arranged on the outside of a finished upper, which is the side not in contact with a wearer's foot when wearing a corresponding article of footwear comprising upper 800.

Instead of or in addition to the reinforcement element 810, upper 800 further comprises a lateral 820 and a medial 821 padding element in a collar area 825. The padding elements 820, 821 may be attached to upper 800 in the same manner as described with reference to reinforcing element 810. While **Figure 8** depicts two additional elements in a toe 815 and collar area 825, further elements in different areas are also applicable and well known to the skilled person.

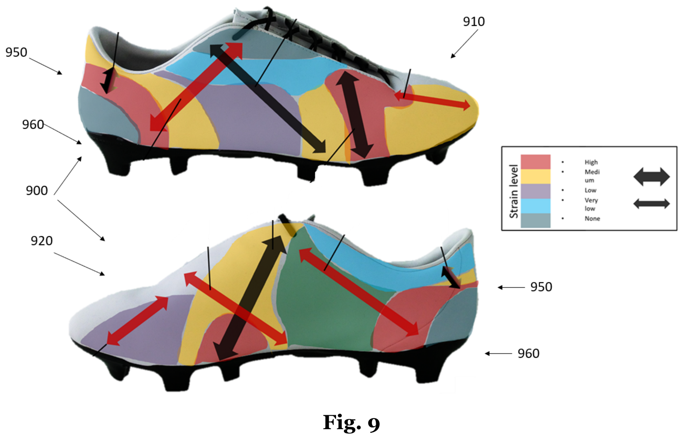

**Figure 9** depicts an embodiment of an article of footwear 900 from a lateral point of view 910 and a medial point of view 920. Article of footwear 900 is manufactured according to the methods described herein. For example, upper 950 of footwear 900 may be manufactured as described above with reference to method 100. Article of footwear 900 further comprises a sole 960 attached to upper 950. For example, a part of the cured strands of upper 950 may be heated and attached to a sole 960. Based on the heated strands, no stitching or glueing may be required for attaching the sole 960 to the upper 950.

**In** **Figure 9****,** various zones having a different level of mechanical stiffness are provided. The different level of mechanical stiffness may be achieved by varying a strand density accordingly. A higher strand density results in a higher mechanical stiffness. A lower strand density results in a lower mechanical stiffness. While the indicated zones in **Figure 9** may be optimized for soccer shoes, other arrangement of zones may also be applicable based on requirements of other kind of footwear. These zones are generally known to the skilled person.

While the above embodiments indicate various individual examples, one or more of these examples may also be combined together in an article of footwear 200, 600, 700, 750, 900 according to the present disclosure. For example, the textured strands 430, 440 as described with reference to **Figure 4** may be combined with any of the embodiments describing various mechanical properties in various zones. Moreover, an article of footwear 700 having openings 711 for improved breathability as described with reference to **Figure 7A** may also have a closed surface 761 in another area of the same upper 210, 610, 710, 760, 800, 950 with improved watertightness and abrasion resistance as described with reference to **Figure 7B****.**

In the following, further preferred embodiments are disclosed to facilitate understanding the invention:
1. A method (100) of manufacturing an upper (210, 610, 710, 760, 800, 950) for an article of footwear (200, 600, 700, 750, 900), the method comprising:
   providing (110) a polymer;
   providing (120) a solvent;
   mixing (130) the polymer with the solvent, thereby producing a liquified polymer;
   providing (140) a substrate (300, 400);
   dispensing (150) strands (430, 500) of the liquified polymer onto the substrate such that the strands form a shape of at least a part of the upper;
   curing (160) the strands; and
   removing (170) the cured strands (440, 510) from the substrate.
2. The method according to embodiment 1, wherein the substrate comprises a three-dimensional shape of at least a part of a last (300), in particular wherein the substrate is a last.
3. The method according to embodiment 1 or 2, wherein the substrate comprises a metallic surface (310), a textured surface (420) or a combination thereof.
4. The method according to one of the embodiments 1 to 3, wherein the dispensing comprises dispensing the liquified polymer through a nozzle, in particular by moving the nozzle with respect to the substrate.
5. The method according to one of the embodiments 1 to 4, wherein the dispensing comprises dispensing strands with a width of 1-10 mm, preferably 2 mm-4 mm, most preferably 3 mm.
6. The method according to one of the embodiments 1 to 5, wherein a width of the strands after the curing is 0.3 mm-0.7 mm, preferably 0.5 mm.
7. The method according to one of the embodiments 1 to 6, wherein the dispensing comprises dispensing the strands in a first area of the substrate and a second area of the substrate such that a mechanical property of the cured strands in the first area differs from a mechanical property of the cured strands in the second area.
8. The method according to embodiment 7, wherein a magnitude of a mechanical property of the cured strands in a third area differs from a magnitude of the same mechanical property of the cured strands in a fourth area.
9. The method according to embodiment 7 or 8, wherein the mechanical property of the cured strands is at least one of density, width, strand diameter, elasticity, breathability, watertightness, tensile strength, shore hardness, traction, or a combination thereof.
10. The method according to one of the embodiments 1 to 9, wherein the dispensing comprises dispensing the strands in a strand pattern (230, 240, 250, 260), in particular by arranging individual strands on the substrate and/or a previously dispensed strand to form the strand pattern.
11. The method according to one of the embodiments 1 to 10, wherein the method further comprises:
   heating at least a part of the cured strands; and
   attaching the part of the strands to a first component of the article of footwear.
12. The method according to embodiment 11, wherein the first component comprises a sole component (220, 620, 625, 720, 770, 960), in particular a midsole.
13. The method according to one of the embodiments 1 to 12, the method further comprising arranging a second component on the substrate prior to the dispensing, wherein the dispensing further comprises dispensing the strands of the liquified polymer at least partly onto the substrate and onto the second component.
14. The method according to embodiment 13, wherein the second component comprises at least one of a reinforcing component, a padding component, a foil component, a mesh component, a foam component.
15. The method according to one of the embodiments 1 to 14, wherein the polymer is selected from the group of polyurethanes (PU), thermoplastic polyamides (TPA), thermoplastic polyesters (TPE), thermoplastic styrenic block copolymers (TPS), thermoplastic polyurethanes (TPU), thermoplastic vulcanizates (TPV), rubber or ethylene-vinyl copolymer (EVA), preferably thermoplastic polyurethanes (TPU), and/or combinations thereof.
16. The method according to one of the embodiments 1 to 15, wherein the solvent is a mixture selected from a group of solvent-borne and/or water-borne solvents, preferably from the group of solvent-borne solvents, more preferably from the group of (C1-C6) ethers, (C1-C10) esters, (C1-C8) ketones, (C1-C8) alkanes, and/or combinations thereof.
17. The method according to one of the embodiments 1 to 16, wherein the solvent is a mixture of one or more of tetrahydrofuran (THF), methyl ethyl ketone (MEK), cyclohexane (CYC), ethyl acetate, butyl acetate, preferably THF and/or CYC.
18. The method according to embodiment 17, wherein a ratio of the mixture is in the range of 10 to 90 vol. %, preferably 20 to 80 vol. %, more preferably 30 to 70 vol. %.
19. The method according to embodiment 17, wherein a ratio of the mixture is in the range of 10 to 90 wt. %, preferably 20 to 80 wt. %, more preferably 30 to 70 wt. %.
20. The method according to one of the embodiments 1 to 19, wherein the liquified polymer comprises a dynamic viscosity of 10000 to 50000 mPa·s, preferably of 20000 to 40000 mPa·s.
21. The method according to one of the embodiments 1 to 20, wherein a ratio of the polymer to the solvent in the mixing step is in the range of 2:98 to 40:60 vol. %, preferably, 5:95 to 30:70 vol. %, more preferably, 10:90 to 20:80 vol. %.
22. The method according to one of the embodiments 1 to 21, wherein the liquified polymer further comprises pigments and/or fibers.
23. The method according to one of the embodiments 1 to 22, wherein the liquified polymer further comprises granulates.
24. The method according to one of the embodiments 1 to 23, wherein the liquified polymer further comprises a blowing agent.
25. The method according to one of the embodiments 1 to 24, wherein in the curing comprises curing at a curing temperature of between 20°C to 150°C, preferably 30°C to 100°C, more preferably 40°C to 50°C, for a curing duration of between 2 min to 750 min, preferably, 5 min to 390 min, more preferably 10 min to 30 min.
26. The method according to one of the embodiments 1 to 25, wherein the dispensing comprises dispensing the liquified polymer having a temperature in the range of 10°C to 40°C, preferably 15°C to 30°C, most preferably ambient temperature.
27. An upper (210, 610, 710, 760, 800, 950) for an article of footwear (200, 600, 700, 750, 900) made by a method (100) comprising the steps according to one of the preceding method embodiments 1 to 26.

## Claims

1. A method (100) of manufacturing an upper (210, 610, 710, 760, 800, 950) for an article of footwear (200, 600, 700, 750, 900), the method comprising:
providing (110) a polymer;
providing (120) a solvent;
mixing (130) the polymer with the solvent, thereby producing a liquified polymer;
providing (140) a substrate (300, 400);
dispensing (150) strands (430, 500) of the liquified polymer onto the substrate such that the strands form a shape of at least a part of the upper;
curing (160) the strands; and
removing (170) the cured strands (440, 510) from the substrate.

2. The method according to claim 1, wherein the substrate comprises a three-dimensional shape of at least a part of a last (300), in particular wherein the substrate is a last, and/or wherein the substrate comprises a metallic surface (310), a textured surface (420) or a combination thereof.

3. The method according to one of the claims 1 to 2, wherein the dispensing comprises dispensing the liquified polymer through a nozzle, in particular by moving the nozzle with respect to the substrate, and/or wherein the dispensing comprises dispensing strands with a width of 1-10 mm, preferably 2 mm-4 mm, most preferably 3 mm.

4. The method according to one of the claims 1 to 3, wherein a width of the strands after the curing is 0.3 mm-0.7 mm, preferably 0.5 mm.

5. The method according to one of the claims 1 to 4, wherein the dispensing comprises dispensing the strands in a first area of the substrate and a second area of the substrate such that a mechanical property of the cured strands in the first area differs from a mechanical property of the cured strands in the second area.

6. The method according to claim 5, wherein a magnitude of a mechanical property of the cured strands in a third area differs from a magnitude of the same mechanical property of the cured strands in a fourth area, wherein the mechanical property of the cured strands preferably is at least one of density, width, strand diameter, elasticity, breathability, watertightness, tensile strength, shore hardness, traction, or a combination thereof.

7. The method according to one of the claims 1 to 6, wherein the dispensing comprises dispensing the strands in a strand pattern (230, 240, 250, 260), in particular by arranging individual strands on the substrate and/or a previously dispensed strand to form the strand pattern.

8. The method according to one of the claims 1 to 7, wherein the method further comprises:
heating at least a part of the cured strands; and
attaching the part of the strands to a first component of the article of footwear, wherein the first component preferably comprises a sole component (220, 620, 625, 720, 770, 960), in particular a midsole.

9. The method according to one of the claims 1 to 8, the method further comprising arranging a second component on the substrate prior to the dispensing, wherein the dispensing further comprises dispensing the strands of the liquified polymer at least partly onto the substrate and onto the second component, wherein the second component preferably comprises at least one of a reinforcing component, a padding component, a foil component, a mesh component, a foam component.

10. The method according to one of the claims 1 to 9, wherein the polymer is selected from the group of polyurethanes (PU), thermoplastic polyamides (TPA), thermoplastic polyesters (TPE), thermoplastic styrenic block copolymers (TPS), thermoplastic polyurethanes (TPU), thermoplastic vulcanizates (TPV), rubber or ethylene-vinyl copolymer (EVA), preferably thermoplastic polyurethanes (TPU), and/or combinations thereof, and/or wherein the solvent is a mixture selected from a group of solvent-borne and/or water-borne solvents, preferably from the group of solvent-borne solvents, more preferably from the group of (C1-C6) ethers, (C1-C10) esters, (C1-C8) ketones, (C1-C8) alkanes, and/or combinations thereof, and/or wherein the solvent is a mixture of one or more of tetrahydrofuran (THF), methyl ethyl ketone (MEK), cyclohexane (CYC), ethyl acetate, butyl acetate, preferably THF and/or CYC, wherein preferably a ratio of the mixture is in the range of 10 to 90 vol. %, preferably 20 to 80 vol. %, more preferably 30 to 70 vol. %, and/or wherein a ratio of the mixture is in the range of 10 to 90 wt. %, preferably 20 to 80 wt. %, more preferably 30 to 70 wt. %.

11. The method according to one of the claims 1 to 10, wherein the liquified polymer comprises a dynamic viscosity of 10000 to 50000 mPa·s, preferably of 20000 to 40000 mPa·s, and/or wherein a ratio of the polymer to the solvent in the mixing step is in the range of 2:98 to 40:60 vol. %, preferably, 5:95 to 30:70 vol. %, more preferably, 10:90 to 20:80 vol. %.

12. The method according to one of the claims 1 to 11, wherein the liquified polymer further comprises pigments and/or fibers, and/or wherein the liquified polymer further comprises granulates, and/or wherein the liquified polymer further comprises a blowing agent.

13. The method according to one of the claims 1 to 12, wherein in the curing comprises curing at a curing temperature of between 20°C to 150°C, preferably 30°C to 100°C, more preferably 40°C to 50°C, for a curing duration of between 2 min to 750 min, preferably, 5 min to 390 min, more preferably 10 min to 30 min.

14. The method according to one of the claims 1 to 13, wherein the dispensing comprises dispensing the liquified polymer having a temperature in the range of 10°C to 40°C, preferably 15°C to 30°C, most preferably ambient temperature.

15. An upper (210, 610, 710, 760, 800, 950) for an article of footwear (200, 600, 700, 750, 900) made by a method (100) comprising the steps according to one of the preceding method claims 1 to 14.
